# EUROPEAN PATENT APPLICATION

(11) **EP 2 728 525 A1**
(43) Date of publication of application: **07.05.2014**
(21) Application number: 13190816.2
(22) Date of filing: 30.10.2013
(51) Int. Cl.: G06Q 10/08, G06Q 10/06

(54) **A method for replacement conservation of paper documents relating to transport of products among a plurality of users**

(30) Priority: 06.11.2012 IT RE20120079
(71) Applicant: Credemtel S.p.A., 42020 Quattro Castella (RE) (IT); Tesi SpA, 12042 Bra (CN) (IT); Di.Tech Societa' Per Azioni, 40138 Bologna (IT); Topkey S.r.l., 10139 Torino (IT)
(72) Inventor: Provini, Diego, 42020 Quattro Castella, Reggio Emilia (IT); Corsi, Ettore, 42020 Quattro Castella, Reggio Emilia (IT)
(74) Representative: Corradini, Corrado

(57) **Abstract**

A method for digitalisation of paper documents relating to transport of products among a plurality of users (10,11,12), which comprises steps of: generating a first digital document (130), relating to at least a product being transported and based on a first information packet (100) supplied by a sending user (10), to be delivered to at least a receiving user (11), memorising the first digital document (130) in a remote database such that at least the first information packet (100) is accessible, following authentication, at least by the receiving user (11), generating a second digital document (131), correlated to the first digital document (130) and based on a second information packet (110) supplied by the receiving user (110), to be delivered to the sending user (10), memorising, in the database, of the second digital document (131) such that at least the second information packet (110) is accessible, following authentication, at least by the sending user (10).

## Description

### TECHNICAL FIELD

The present invention relates to a method, implemented by a software program, for digitalising or replacement conserving of paper documents correlated to the transport of products among a plurality of users, for example for recognized use under the civil law.

In greater detail, the invention relates to the digitalizing of paper documents such as Transportation Documents, or the immediate invoice, which is emitted by a user selling goods commercially to the benefit of a buyer user by transport of the goods from the seller or sender of the goods to the buyer or receiver.

### PRIOR ART

As is known, the Transportation Document reports the following data:
a progressive number;
the data of emission;
the general details of the seller, the buyer and any person responsible for the transport, if there is one;
the quantity of products transported;
the description of the transported products with the indication of the nature and quality thereof, and
possibly, the indication of the reason for transport (sale, or movement with no transaction, such as for example repair, display, etc.) as well as the return date of the transport.
The seller or sending user prints the Transportation Document in paper form or in 4 copies, for example, of which:
a head-office copy which is recorded and filed by the seller or sending user (supplier);
a customer copy, which is delivered to the buyer or receiving user at the moment of the delivery of the product. Once in possession of the customer copy, the receiving user can add observations relating to the contents and sign it;
one or more carrier copies, each of which is delivered to the carrier user who has been given responsibility for the transport of the product (which will then be recorded and filed by the carrier).

More than one copy can be made in a case where the transport is done in fractions, so as to have available a copy for each carrier. On conclusion of the delivery of the goods the carrier copy (for example only the copy relating to the last fraction) can be completed with observations relating to the contents of the Transportation Document, signed by the receiving user and possibly also signed by the carrier; and lastly
an administration copy which is supplied by the receiving user so that it can then be returned to the supplier, for example via the carrier who transported the product. On completion of the delivery of the goods the administration copy can be completed with observations relating to the contents of the Transportation Document, such as for example incongruences found in relation to the number of products actually delivered, the quality thereof, or other variants which might have occurred during or following the transport, and signed by the receiving user.

The return of this administration copy represents a critical moment in the process as it is subject to loss or delay in delivery of the administration copy itself to the seller user (supplier). This often leads to the issuing, by the seller, of wrong invoices with the consequent office work involved in managing such a mistake, for both user and receiver. The management of any disputes is also made more complex if the required information is unavailable or delayed.

Another very common practice is where the receiving user or buyer writes on the administration copy "accepted with reservations". In this case the receiving user reserves the right to carry out checks on the products effectively delivered by the carrier user responsible for the transport, at a later date with respect to the moment of effective delivery of the product, and to carry out a return and/or lodge disputes in relation to the products which are unsatisfactory (if any) in terms of quality or expected quantity.

In practice, at a later date with respect to the delivery of the product the receiving user delivers to the sending user or seller a further administration copy of the Transportation Document indicating the nature of the dispute, so that the sending user can issue a correct invoice relating to the product that effectively was delivered.

A critical point in this process relates to the possibility that the copies of the Transportation Document might get lost and the sending user might lose the information relating to the non-delivery of all or part of the products, and proceed erroneously to an invoicing which will likely cause dispute on the part of the receiving user, as well as costs and delays in managing the problem.

An example of a method for digitalising the paper documents is disclosed in document D1: CA 2 583 766, which described a method for automatically managing documents, for example documents connected to the transport industry, which comprises following steps:
1. generating a digital document, for example by scanning a paper document; and
2. memorising and storing the paper document, for example signed, in a remotely-accessible server, for example for the invoicing of the transported goods.

An aim of the present invention is to obviate the above-mentioned drawbacks of the prior art, in particular connected to the physical presence of paper documents that are easy to lose and which have to be transported together with the products, with a solution that is simple, rational and relatively inexpensive.

These aims are attained by the characteristics of the invention as reported in the independent claims. The dependent claims delineate preferred and/or particularly advantageous aspects of the invention.

### DESCRIPTION OF THE INVENTION

The invention in particular discloses a method, implemented by a computer program, for digitalising paper documents, relating to paper documents correlated to transport of products among a plurality of users, which comprises steps of:
- generating a first digital document, relating to at least a product being transported and based on a first information packet supplied by a sending user, to be delivered to at least a receiving user,
- memorising the first digital document in a remote database such that at least the first information packet is accessible, following authentication, at least by the receiving user,
- generating a second digital document, correlated to the first digital document and based on a second information packet supplied by the receiving user, to be delivered to the sending user,
- memorising, in the database, of the second digital document such that at least the second information packet is accessible, following authentication, at least by the sending user.

With this solution, a greater velocity and optimising of the passage of data relating to the Transportation Document between the sending user and the receiving user can be achieved, reducing the possibility of sending and receiving invoices not conforming to products actually sold/bought, as well as enabling a dematerialization and a digitalization of the commercial exchange documentation, such as Transportation Documents, with benefits in terms of printing, recording, reduction of lost documents and digitalization of search and control thereof.

In particular, the above method comprises a step of grouping, for example in the remote database, at least a single characteristics of the first and second digital documents in a single digital document in such a way that at least the first information packet and the second information packet are jointly accessible, after authentication, by the sending user and the receiving user. In this way, the Transportation Document can be unequivocally conserved, together with the relative disputation document, enabling a rapid identification and a simple search for them, and enabling digitalization in outsourcing with respect both to the sending user and the receiving user.

In a preferred embodiment the single characteristic is realised by means of a calculation of the relating hash message digest of each digital document.

With this solution, the single digital document can exhibit modest size (in terms of memory occupied), making storage and manipulation thereof easier. Alternatively the two digital documents can be grouped (for example the image thereof) in a single digital document which can be the unifying of the two digital documents.

A further aspect of the invention can comprise a step of generating a first digital signature by the sending user and associating the first digital signature to the first digital document.

Further it can comprise a step of generating a second digital signature by the receiving user and associating the second digital signature to the second digital document.

In this way, each document emitted by the disputing parties is certified by the party and can represent an effective replacement, including in legal terms, of the paper documentation.

Further, in another aspect of the invention the first digital document is generated by a remote processing unit according to the first information packet supplied by the sending user by means of a first application which reaches at least a terminal of the sending user and, further, the second digital document is generated by the remote processing unit according to the second information packet supplied by the receiving user by means of a second application which arrives on a further terminal of the receiving user.

In this way, the remote processing unit can process the data supplied thereto in various information interchange formats, regardless of whether the users have (or not) a data interchange system already in being.

The remote processing unit is advantageously configured such as to generate a notification sendable to at least one from between the sending user and the receiving user of an act of memorisation of at least one from between the first digital document and the second digital document in the remote database and/or the non-memorisation of one of the digital documents.

Further, the remote processing unit is configured such as to publish at least one from between the first digital document and the second digital document in a remote virtual space, accessible following authentication by at least one from between the first digital document and the second digital document. Further, in an aspect of the invention the method comprises a step of temporally marking at least a single characteristic of the single digital document at predeterminable time intervals.

In practice the hash message digest of the single digital document can be calculated and temporally marked, at regular time intervals, for example every two hours.

In this way it is possible to determine the exact chronology of the entries in the digital documents (first or second digital document, or any other documents) which are memorized in the remote database.

Further, the method of the invention can include the step of generating a process closure signal, accessible by and/or sendable to the sending user or the receiving user, if a first predetermined time has passed since the memorising of the first digital document in the remote database or if a second predetermined time has passed since the memorisation of the first digital document in the remote database.

Following the closure signal the single digital document (which comprises a first document or a first and a second document or a first document, for example together with other documents) is not further modifiable.

Further, a hash message digest can be generated and the single digital document can be temporally marked at least once, so as to memorise the relative hash message digest and the relative temporal mark in the remote database.

In a further aspect of the invention an apparatus is provided for carrying out the method as described above.

### BRIEF DESCRIPTION OF THE DRAWINGS

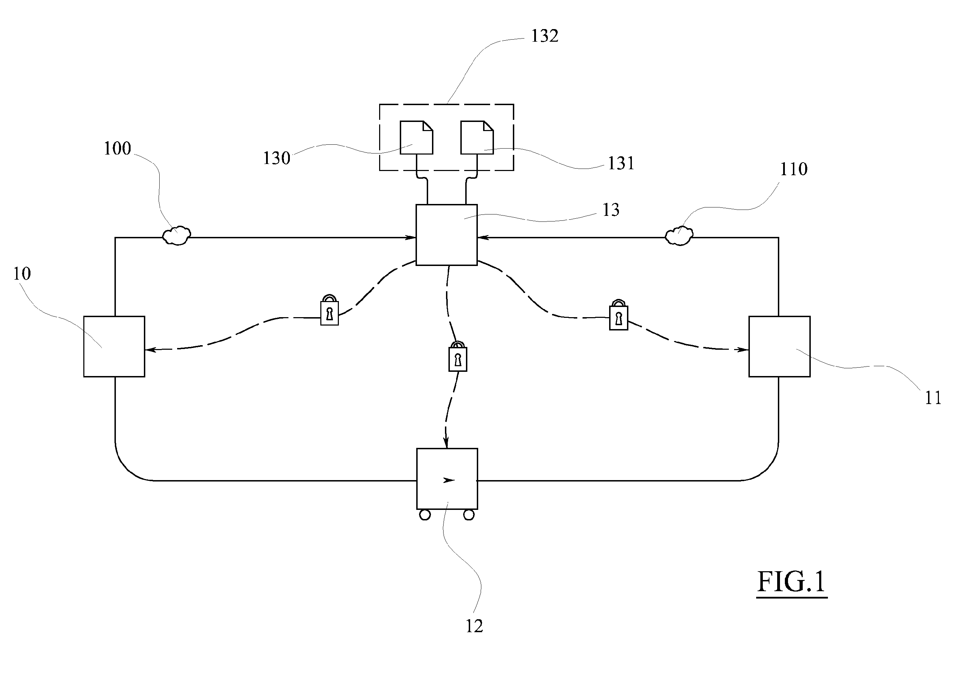

Further characteristics and advantages of the invention will emerge from a reading of the description that follows, provided by way of non-limiting example, with the aid of the figure of the accompanying table.

### BEST WAY OF CARRYING OUT THE INVENTION

With particular reference to the figure of the drawing, a method is described for digitalising, virtualizing or replacement conservation of paper documents related to transport, such as a Transportation Document which accompanies the sale of products by a sending user, denoted with reference number 10, to a receiving user 11, via a carrier user 12, such as a courier, or more than one courier, or the like.

The method requires that each user 10 generates a first information packet 100, such as for example a progressive reference number, the issue date of the document, the general information relating to the sending user 10, the receiving user 11 and the carrier user 12, the quantity of products transported by the carrier user 12, the description of the products transported with an indication of the nature or quality thereof.

The generating of the first information packet 100 can be compiled in any electronic format, for example in EDI, DesAdv, html, txt, spool, pdf or another appropriate format, with the use of a first application by the sending user. The sending user's data system, for example by means of the application, is in connection with a remote processing unit 13, which is provided with memorizing means, such as a physical memory or a virtual memory area, in which the data is storable and cataloguable in a database for electronic documents.

The remote processing unit 13 is able to receive the first information packet 100 generated by the sending user 10 and to generate a first digital document 130, for example in pdf or jpeg format or in another equivalent format.

The first digital document 130, which relates to the products in transport destined to be delivered to the receiving user 11 and is based on the first information packet 100 supplied by the sending user 10, constitutes a Transportation Document which must be passed on to the receiving user 11, accompanying the delivery of the product.

The first digital document 130 generated is then memorised in the remote database and the contents, i.e. the first information packet 100 is made accessible, after authentication for example by means of a login for entry to a protected area of the memorizing means, to the receiving user 11 and, possibly, to the carrier user 12 as well as to the sending user.

As soon as it has been generated, the first digital document 130 is digitally signed by the sending user 10, by means of attaching a digital signature appropriately generated which remains associated to the first digital document.

Further, from the first digital document 130, for example signed, a first hash message digest is calculated (using the remote processing unit 13), i.e. a single characteristic of the first digital document.

When the carrier user 12 has delivered the products to the receiving user 11, the latter 11, having received the first information packet 100 (either because it has downloaded the first digital document directly or because it has directly received the data flow in a format in which the first information packet 100 was generated by the sending user 10 or in another dedicated format) can verify the correspondence between the products sent by the sending user 10 and the products effectively delivered the receiving user by the carrier user 12.

Once the control has been carried out the receiving user 11 generates a second information packet 110 correlated to the first information packet 100, in which the receiving user confirms or contests what has been received. The generation of the second information packet 100 can be compiled in the form of any electronic format, for example in EDI, RecAdv, html, txt, spool, pdf formats, or another appropriate format, by means of the use of a second application usable by the receiving user.

The data system of the receiving user 11, for example by means of the second application, is in connection with the remote processing unit 13.

The remote processing unit 13 is able to receive the second information packet 110 generated by the receiving user 11 and to generate a second digital document 131, for example in pdf, jpeg or another equivalent format, correlated to the first digital document 130.

The second digital document 131, which relates to the confirmation of disputation of products sent to the receiving user 11, constitutes the administrative copy of the Transportation Document that must be delivered to the sending user 10, so that the sending user 10 can then invoice for the amount effectively due to it following on from the confirmation/disputation of the order.

The second digital document 131 generated is then memorised in the remote database and the contents thereof, i.e. the second information packet 100, is made accessible, following authentication for example by means of a login for entry into a protected area of the memorizing means, to the sending user 10 and, possible, to the carrier user 12, as well as to the receiving user 11. As soon as it has been generated, the second digital document 131 is digitally signed by the receiving user 11, by means of attaching a digital signature appropriately generated which remains associated to the second digital document.

Further, from the second digital document 131, for example signed, a second hash message digest is generated (by means of the remote processing unit 13), i.e. a single characteristic of the second digital document.

The remote processing unit 13 is further configured so as to group at least a single characteristic of the first digital document 130 and the second digital document 131 into a single digital document 132 in such a way that at least the first information packet 100 and the second information packet 110 remain attached and are accessible by the sending user 10, the receiving user 11 and, for example, also by the carrier user 13 by means of the above-described authentication and access in the respective reserved area of the remote memorising means.

In practice, in a first embodiment, it is possible to join the two digital documents 130, 131 in a single digital document, which comprises both the above-cited digital documents.

In a second advantageous embodiment, it is possible to place in a single digital document 132, known as the hash file, the first hash message digest and the second hash message digest of the respective digital documents 130, 131.

The single digital document 132 might contain other document types for generating a sort of disputation file, where as well as the first digital document 130 and the second digital document 131 there might also be present other digital documents (or the relative hash message digests), such as for example further communications relating to the disputation, authorization for return, invoices, photographs, notes, etc.

The single digital document 132 memorised in the above-mentioned remote memorising means is then kept as a replacement by the processing unit 13 on behalf of the sending user 10 and the receiving user 11 and the carrier user 12.

The remote processing unit 13 is configured such as to publish at least one from between the first digital document 130 and the second digital document 131, for example immediately following the respective generation thereof, in a remote virtual space, for example a web space or a dedicated portal, accessible following authentication by the sending user 10 and the receiving user 11 and, for example, also the carrier user 12.

Further, the remote processing unit 13 is configured such as to generate a notification, for example an email, certified email, telephone sms text message or another type of message, which is sent to the receiving user 12, the sending user 10 and possibly the carrier user 12 when the first digital document 130 and/or the second digital document 131 and/or the single digital document 132 have been memorised in the remote database and/or have been published in the remote virtual space.

The memorisation of the digital documents 130, 131, 132 might occur in separate spaces in the database, each of which is dedicated, by means of appropriate authentication, to the various users 10,11,12.

It is advantageously possible for the application used by each of the sending user 10, the receiving user 11 and the carrier user 12, via virtual interfaces, to display the first digital document 130, the second digital document 131 and/or the single digital document 132 or the relative information contained therein, to catalogue the data using codes easily researchable, groupable in predefinable categories according to needs.

Further, there can be a step of temporally marking, at predeterminable time intervals, for example every 2 hours, the single digital document 132 (or the disputation file) or a single characteristic such as a third hash message digest relative thereto.

In practice the temporal marking consists in associating to each document present in the file or to the file itself a data and time (for example a universal time coordinate UTC), with which it is possible to define with certainty the exact order in time in which each document of file has been memorised in the remote processing unit 13.

Further, each remote processing unit can generate a disputation file closing signal, which is accessible by involved users 10, 11, 12 or is sent to them. For example, the closed signal can be activated on verification of the first from the two below-described circumstances:
- following a first predetermined time period (for example 4 days) from memorisation of the first digital document 130 (or any one of the digital documents present in the file) in the remote processing unit 13;
- or whether a second predetermined time (for example 4 hours) has passed since the memorisation of the second digital document 131 in the remote processing unit 13.

When a disputation file is closed it can no longer be modified, i.e. documents cannot be added thereto or removed therefrom (or relative single characteristics).

Once the disputation file is closed, a calculation is made of the hash message digest thereof, for example the single digital document 132 containing all the hash message digests of the digital documents present up to the moment of closure, the temporal marking thereof and, in the remote processing unit 13 the hash message digest and the temporal marking thereof.

The invention as it is conceived is susceptible to numerous modifications and variants, all falling within the scope of the inventive concept.

Further, all the details can be replaced by other technically-equivalent elements.

In practice, the materials used, as well as the contingent shapes and dimensions, can be any according to requirements, without forsaking the scope of protection of the following claims.

## Claims

1. A method implemented by a computer software program for digitalisation of paper documents relating to transport of products among a plurality of users (10,11,12), which comprises steps of:
- generating a first digital document (130), relating to at least a product being transported and based on a first information packet (100) supplied by a sending user (10), to be delivered to at least a receiving user (11),
- memorising the first digital document (130) in a remote database such that at least the first information packet (100) is accessible, following authentication, at least by the receiving user (11),
- generating a second digital document (131), correlated to the first digital document (130) and based on a second information packet (110) supplied by the receiving user (110), to be delivered to the sending user (10),
- memorising, in the database, of the second digital document (131) such that at least the second information packet (110) is accessible, following authentication, at least by the sending user (10),
**characterised in that** it comprises a step of grouping at least a single characteristic of the first and the second digital document (130, 131) in a single digital document (132) in such a way that at least the first information packet (100) and the second information packet (110) are accessible by the sending user (10) and the receiving user (11).

2. The method of claim 1, wherein the single characteristic of the first digital document (130) is a first hash message digest, the single characteristic of the second digital document (131) is a second hash message digest, the step of grouping comprises the step of placing, in the single digital document (132), the first and second hash message digest.

3. The method of claim 1, **characterised in that** it comprises a step of generating a first digital signature by the sending user and associating the first digital signature to the first digital document (130).

4. The method of claim 1, **characterised in that** it comprises a step of generating a second digital signature by the receiving user and associating the second digital signature to the second digital document (131).

5. The method of claim 1, wherein the first digital document (130) is generated by a remote processing unit (13) according to the first information packet (100) supplied by the sending user (10) by means of a first application.

6. The method of claim 5, wherein the second digital document (131) is generated by the remote processing unit (13) according to the second information packet (110) supplied by the receiving user (11) by means of a second application.

7. The method of claim 5, wherein the remote processing unit (13) is configured such as to generate a notification sendable to at least one from between the sending user (10) and the receiving user (11) of an act of memorisation of at least one from between the first digital document (130) and the second digital document (131) in the remote database.

8. The method of claim 5, wherein the remote processing unit (13) is configured such as to publish at least one from between the first digital document (130) and the second digital document (131) in a remote virtual space, accessible following authentication by at least one from between the sending user (10) and the receiving user (11).

9. The method of claim 1, **characterised in that** it comprises a step of temporally marking, at predeterminable time intervals, at least a single characteristic of the single digital document (132).

10. The method of claim 9, wherein the single characteristics of the single digital document (132) is a third hash message digest.

11. The method of claim 1, **characterised in that** it generates a process closing signal, accessible by the sending user (10) and the receiving user (11), if a first predetermined time has passed since the memorisation of the first digital document (130) in the remote database or if a second predetermined time has passed since the memorisation of the second digital document (131) in the remote database.

12. An apparatus for carrying out the steps of the method according to any one of the preceding claims, which comprises:
- at least a remote processing unit (13) able to generate a first digital document (130), relating to at least a product being transported and based on a first packet of information (100) supplied by a sending user (10), by means of a first information application, to be delivered to at least a receiving user (11),
- remote memorising means able to store the first digital document (130) in a remote database such that at least the first information packet (100) is accessible, following authentication, at least by the receiving user (11),
- the processing unit (13) being able to generate a second digital document (131), correlated to the first digital document (130) and based on a second information packet (110) supplied by the receiving user (110), by means of a second information application, to be delivered to the sending user (10), and
- the memorising means being able to store the second digital document (131) in the remote database, such that at least the second information packet (110) is accessible, following authentication, at least by the sending user (10).
